# EUROPÄISCHE PATENTSCHRIFT

(11) **EP 4 105 564 B1**
(45) Veröffentlichungstag und Bekanntmachung des Hinweises auf die Patenterteilung: **05.11.2025**
(21) Anmeldenummer: 22175047.4
(22) Anmeldetag: 24.05.2022
(51) Int. Cl.: F24C 15/20, B01D 46/12, B01D 46/90

(54) **KOMBINATIONSGERÄT**
COMBINATION APPLIANCE
APPAREIL COMBINÉ

(30) Priorität: 16.06.2021 DE 102021206126
(43) Veröffentlichungstag der Anmeldung: 21.12.2022
(73) Patentinhaber: BSH Hausgeräte GmbH, 81739 München (DE)
(72) Erfinder: Driedger, Benjamin, 76356 Weingarten (Baden) (DE); Herbst, Jens, 75015 Bretten (DE); Kateb, Adnen, 76133 Karlsruhe (DE); Schopp, Daniel, 74374 Zaberfeld (DE)

(56) Entgegenhaltungen:
- EP-A1- 3 457 033
- EP-A2- 3 375 506
- WO-A1-2020/212260
- CN-U- 202 118 979
- CN-U- 211 575 193
- DE-A1- 10 102 100
- DE-A1- 102013 212 921
- DE-U1- 202013 101 925
- DE-U1- 8 801 606
- KR-A- 20060 024 960
- KR-A- 20200 121 559
- US-A1- 2004 170 539

## Beschreibung

Die vorliegende Erfindung betrifft ein Kombinationsgerät mit einer Dunstabzugsvorrichtung, die eine Filtereinheit aufweist.

Aus dem Stand der Technik sind Filtereinheiten bekannt, die bei Dunstabzugshauben eingesetzt werden können. Solche Filtereinheiten sind beispielsweise in DE 10 2013 212 921 A1, KR 2006 002 49 60 A, DE 88 01 606 U1, DE 20 2013 101925 U1 und US 2004/170 539 A1 beschrieben. Weitere Filtereinheiten sind beispielsweise in CN 202 118 979 U, CN 211 575 193 U, EP 3 375 506 A2 und DE 10 102 100 A1 beschrieben. In KR 2020 0121559 A ist außerdem ein Tisch-Holzofen mit einer Rauchabsaugung offenbart.

Zur Reinigung von Dünsten und Wrasen, die beim Kochen entstehen, sind Dunstabzugsvorrichtungen bekannt, die mit einem Kochfeld integriert sind und bei denen Luft über eine Ansaugöffnung in oder neben dem Kochfeld nach unten abgesaugt wird. Das Kochfeld mit der Dunstabzugsvorrichtung kann auch als Kombinationsgerät bezeichnet werden. In EP 3 457 033 A1 und WO 2020/212260 A1 sind derartige Kombinationsgeräte offenbart. Bei diesen Dunstabzugsvorrichtungen werden in der Regel Fettfilter verwendet werden, die aus zwei Filterelementen bestehen, die hochkant in einer V-förmigen Anordnung in der Ansaugöffnung eingesetzt sind. Hierbei können die Filterelemente nach dem Einführen durch die Ansaugöffnung etwas auseinander geklappt werden.

Ein Nachteil dieser Art der Filtereinheit besteht darin, dass die Größe der Filterelemente durch die Höhe des Kombinationsgerätes und die Abmessungen der Ansaugöffnung limitiert ist und somit die in dem Kombinationsgerät zur Verfügung stehende Filterfläche ebenfalls limitiert ist.

Die mit dieser bekannten Filtereinheit zu erzielende Fettabscheidungseffizienz ist daher begrenzt.

Es ist Aufgabe der vorliegenden Erfindung eine Lösung zu schaffen, mit der die Fettabscheidungseffizienz erhöht werden kann.

Die Aufgabe wird gelöst durch ein Kombinationsgerät, in dem eine Dunstabzugsvorrichtung mit einem Kochfeld integriert ist. Die Dunstabzugsvorrichtung ist dadurch gekennzeichnet, dass die Dunstabzugsvorrichtung zumindest eine Filtereinheit aufweist, wobei die Filtereinheit zwei Filterelemente aufweist, die miteinander über ein Zentralteil, an dem die Filterelemente beweglich befestigt sind, beweglich verbunden sind und aus mindestens zwei Filterteilen bestehen, die jeweils so über ein Gelenk beweglich miteinander verbunden sind, dass der Winkel zwischen zwei benachbarten Filterteilen eines Filterelementes in einer Betriebsposition der Filtereinheit größer als 90° und kleiner als 270° ist.

Die Dunstabzugsvorrichtung stellt eine Dunstabzugsvorrichtung eines Kombinationsgerätes, das aus einer Dunstabzugsvorrichtung und einem Kochfeld besteht, dar. Die Dunstabzugsvorrichtung weist eine Ansaugöffnung auf, die in oder neben der Deckplatte des Kochfeldes vorgesehen sein kann. Die Ansaugöffnung stellt vorzugsweise eine längliche Ansaugöffnung dar. Im Inneren der Dunstabzugsvorrichtung kann eine Führung für das mindestens eine Filterelement der Filtereinheit beispielsweise in Form von Schienen vorgesehen sein.

Die Filtereinheit kann zumindest teilweise in die Dunstabzugsvorrichtung eingebracht werden. Insbesondere kann das mindestens eine Filterelement durch die Ansaugöffnung in die Dunstabzugsvorrichtung nach unten eingebracht und aus dieser nach oben wieder entnommen werden.

Die Filtereinheit weist zwei Filterelemente auf. Das Filterelement kann auch als Filterkette bezeichnet werden. Insbesondere besteht das Filterelement aus mindestens zwei Filterteilen. Jedes der Filterteile weist Filtermaterial beispielsweise Streckmetall auf. Vorzugsweise weist jedes Filterteil einen Rahmen auf, in dem das Filtermaterial, beispielsweise Streckmetalllagen, gehalten wird. Die Filterteile weisen vorzugsweise jeweils eine rechteckige Form auf.

Die Filterteile sind jeweils über ein Gelenk beweglich miteinander verbunden. Die Seite des Filterteils, an dem das Gelenk vorgesehen oder gebildet ist, wird auch als Gelenkseite des Filterteils bezeichnet. Die Gelenkseite stellt insbesondere eine Außenseite des Filterteils, insbesondere eine Außenseite des Rahmens des Filterteils dar.

Sind mehr als zwei Filterteil vorgesehen, ist ein erstes Filterteil mit dem zweiten Filterteil über ein Gelenk verbunden. Die Verbindung zwischen einem dritten Filterteil und dem zweiten Filterteil erfolgt dann an der Seite des zweiten Filterteils, die dem Gelenk zu dem ersten Filterteil abgewandt ist. Das zweite Filterteil weist damit zwei gegenüberliegende Gelenkseiten auf.

Die Filterteile sind so über ein Gelenk miteinander beweglich verbunden, dass der Winkel zwischen zwei benachbarten Filterteilen eines Filterelementes in einer Betriebsposition der Filtereinheit größer als 90° und kleiner als 270° ist. Als Betriebsposition der Filtereinheit wird die Position bezeichnet, in der die Filtereinheit in die Dunstabzugsvorrichtung eingebracht ist und in der die Dunstabzugsvorrichtung betrieben werden kann. Die Betriebsposition kann daher auch als eingebrachte Position der Filtereinheit bezeichnet werden. Der Winkel zwischen benachbarten Filterteilen ist größer als 90° und kleiner als 270°. Der Winkel liegt vorzugsweise zwischen den Oberseiten der Filterteile der Filtereinheit in der Betriebsposition.

Indem die Filtereinheit zwei Filterelemente aufweist, die aus mindestens zwei beweglich miteinander verbundenen Filterteilen bestehen, kann eine Reihe von Vorteilen erzielt werden.

Die Filterelemente können flexibel in das Gerät eingeführt werden und wieder entnommen werden. Dabei muss die Einführungsöffnung nur so groß sein, wie die projizierte Filterelementfläche in Einführungsrichtung ist. diese Fläche entspricht vorzugsweise der Seitenfläche eines Filterteils. Zudem ist die Größe des Filterelementes aufgrund der durch die Gelenke geschaffenen Flexibilität nicht durch die Höhe der Dunstabzugsvorrichtung beschränkt. Die Größe des Filterelementes und damit die zur Verfügung stehende Filterfläche kann daher maximiert werden. Insbesondere kann, indem in der Betriebsposition der Winkel zwischen benachbarten Filterteilen in dem beanspruchten Bereich liegt, nämlich größer als 90° und kleiner als 270° ist, die Fläche, die von den Filterteilen abgedeckt werden kann, vergrößert werden.

Damit kann durch die Erfindung eine effiziente Fettabscheidung erzielt werden. Effizienz bezieht sich dabei sowohl auf die Abscheidung von Fettpartikeln als auch auf den resultierenden Druckverlust der Durchströmöffnung des Fettfilters. Ein wichtiges Maß sowohl für die Abscheidung als auch für den Druckverlust ist die Durchströmungsgeschwindigkeit der verunreinigten Luft durch das oder die Filterelemente. Mit der durch die Erfindung erzielbaren größeren Filtergröße können Druckverlust und Durchströmungsgeschwindigkeit optimiert werden.

Der Winkel zwischen den benachbarten Filterteilen in der Betriebsposition liegt vorzugsweise im Bereich um 180°. Hierdurch liegen die benachbarten Filterteile in nebeneinander und vorzugsweise in einer Ebene. Gemäß einer bevorzugten Ausführungsform liegen alle Filterteile eines Filterelementes in der Betriebsposition in einer Ebene. Hierdurch kann die Fläche, die von den Filterteilen abgedeckt werde kann, maximiert werden.

Allerdings ist es erfindungsgemäß auch möglich, dass der Winkel zwischen den benachbarten Filterteilen in dem Filterelement geringfügig größer als 180° ist. Beispielsweise kann dieser größere Winkel zwischen dem äußeren Filterteil und dem dazu benachbarten Filterteil liegen. Hierdurch ist das äußere Filterteil gegenüber dem benachbarten Filterteil leicht nach unten geneigt. Eine solche Neigung kann insbesondere zum Ablaufen von Verunreinigungen, die an dem Filterteil abgeschieden wurden, dienen.

Erfindungsgemäß weist die Filtereinheit zwei Filterelemente auf, die miteinander beweglich verbunden sind. Die Filterelemente stellen dabei jeweils eine Filterkette mit mindestens zwei Filterteilen dar. Indem zwei Filterelemente vorgesehen sind können diese sich nach dem Einbringen in die Dunstabzugsvorrichtung in unterschiedliche Richtungen erstrecken. Somit können beispielsweise bei einer Ansaugöffnung, die in der Mitte einer Deckplatte eines Kochfeldes vorgesehen ist, die Filterelemente sich nach dem Einbringen durch die Ansaugöffnung im Inneren der Dunstabzugsvorrichtung über die beiden Seiten der Ansaugöffnung hinaus erstrecken.

Gemäß einer Ausführungsform ist an der Verbindung der zwei Filterelemente ein Griff befestigt. Insbesondere kann der Griff an einem Zentralteil über eine Halterung in Form von Seilen oder Stangen befestigt sein. Durch Vorsehen eines Griffes an der Verbindung der zwei Filterelemente können die Filterelemente beim Einführen in oder Entnehmen aus der Dunstabzugsvorrichtung als geradliniges Element vorliegen.

Gemäß einer Ausführungsform liegt der Winkel zwischen den Filterteilen der Filtereinheit, die über die Verbindung der zwei Filterelemente miteinander verbunden sind, in der Betriebsposition der Filtereinheit in einem Bereich zwischen 90 und 180°. Dieser Winkel zwischen Filterteilen unterschiedlicher Filterelemente liegt vorzugsweise zwischen den Unterseiten der Filterteile in den der Betriebsposition. Beträgt der Winkel zwischen den benachbarten Filterteilen der unterschiedlichen Filterelemente 180°, so liegen die Filterteile in einer Ebene. Beträgt der Winkel hingegen geringer als 180° können die benachbarten Filterteile zu den weiteren Filterteilen des entsprechenden Filterelementes nach oben geneigt sein. Durch diese Neigung kann das Ablaufen von Verunreinigungen an dem Filterteil begünstigt werden.

Gemäß einer Ausführungsform ist an der Gelenkseite mindestens eines Filterteils mindestens einen Verbindungssteg zur Bildung des Gelenkes vorgesehen, der sich in Richtung des Filterteils, zu dem die Gelenkverbindung hergestellt werden soll, erstreckt.

Gemäß einer Ausführungsform ist an dem Verbindungssteg eine Noppe oder eine Senke vorgesehen. Die Noppe kann auch als männliches Verbindungselement und die Senke als weibliches Verbindungselement bezeichnet werden. Durch das Zusammenwirken dieser Elemente an Verbindungsstegen unterschiedlicher Filterteile wird ein Gelenk gebildet. Mittels dieser Verbindung können zwei Filterteil an definierten Stellen formschlüssig in Form eines Gelenks miteinander verbunden werden und können damit auf einfache Weise das Filterelement, das heißt Filterkette bilden.

Vorzugsweise weist das Filterteil an der Gelenkseite an jedem der seitlichen Ränder einen Verbindungssteg auf. Gemäß einer Ausführungsform weist das Filterteil zwei gegenüberliegende Gelenkseiten auf und an jeder der Gelenkseiten sind zwei Verbindungsstege vorgesehen.

Bei dem mehrteiligen Filterelement ist es ein zusätzliches Erfordernis die Dichtigkeit des Filterelementes trotz der zum Drehen der Filterteile notwendigen Spalte zu gewährleisten, das heißt eine Leckage zu minimieren. Hierzu können die Spalte zwischen den Filterteil durch eine geeignete Dicke der Filterteile minimiert werden. Zudem kann eine zusätzliche Abdeckung vorgesehen sein.

Gemäß einer Ausführungsform wird die Abdeckung vorgesehen, indem an der Gelenkseite eines Filterteils ein sich über die Breite der Gelenkseite erstreckender Dichtstreifen vorgesehen ist. Der Dichtstreifen kann aus Metall, beispielsweise aus dem Material des Filterrahmens gebildet werden. Gemäß einer Ausführungsform steht der Dichtstreifen an der Unterkante der Gelenkseite hervor. Die Breite des Dichtstreifens entspricht vorzugsweise höchstens der Hälfte des Abstandes zwischen zwei sich zugewandten Gelenkseiten zweier Filterteile. Durch einen solchen Dichtstreifen hat kann ein sonst zwischen den Filterteilen bestehender Spalt im Bereich des Gelenkes abgedeckt werden. Bei dieser Ausführungsform ist allerdings, insbesondere bei der Ausgestaltung des Dichtstreifens aus Metall die Bewegungsfreiheit der Filterteil über das Gelenk eingeschränkt.

Richtungsangaben, wie oben, unten, vorne und hinten beziehen sich, soweit nicht anders angegeben, auf die Dunstabzugsvorrichtung im installierten Zustand und die Filtereinheit im Betriebszustand Zustand. Als Vorderseite wird die Seite bezeichnet, die dem Benutzer zugewandt ist.

Vorteile und Merkmale, die bezüglich der Filtereinheit beschrieben werden, gelten - soweit anwendbar - auch für die Dunstabzugsvorrichtung und umgekehrt und werden daher gegebenenfalls nur einmalig beschrieben.

Gemäß einer Ausführungsform der Dunstabzugsvorrichtung ist in der Dunstabzugsvorrichtung eine Führung für das mindestens eine Filterelement vorgesehen. Die Führung kann beispielsweise als seitliche Schienen ausgebildet sein. Die Führung kann insbesondere in dem Gerätegehäuse des Kombinationsgerätes vorgesehen sein.

Gemäß einer weiteren Ausführungsform weist die Dunstabzugsvorrichtung ein Gerätegehäuse auf und in dem Gerätegehäuse sind mindestens zwei Auflageflächen für zumindest einen Teil des mindestens einen Filterelementes vorgesehen, wobei die Auflageflächen den Positionen der Gelenke zwischen den Filterteilen entsprechen. Insbesondere können die Auflageflächen Streben darstellen, die zueinander in einem Abstand liegen, die der Länge der Filterteile entspricht. Hierdurch sind die Auflageflächen an Positionen der Gelenke zwischen den Filterteilen vorgesehen. Durch die Auflageflächen kann neben dem Halten und Führen des oder der Filterelemente auch die Dichtigkeit an den Übergängen zwischen den Filterteilen gewährleistet werden. Bei dieser Ausführungsform ist das Vorsehen von Dichtstreifen an den Filterteilen nicht erforderlich, sondern die Dichtigkeit wird rein durch die Einbaulage der Filterelemente gewährleistet. Somit kann bei dieser Ausführungsform ein Filterelement ohne Dichtstreifen verwendet werden, wodurch die Gelenkbewegung der Filterkette nicht eingeschränkt ist.

Das Material der Auflagefläche kann hart sein. Gemäß einer Ausführungsform wird die Auflagefläche aus einem elastisch verformbaren Material gebildet und ist daher eher weich. Hierdurch wird die Abdichtung weiter verbessert.

Gemäß einer Ausführungsform weisen die Auflageflächen jeweils eine mittige Erhöhung auf. Durch diese Erhöhung kann zum einen das exakte Positionieren des Filterelementes gewährleistet werden und zum anderen die Dichtwirkung weiter verbessert werden.

Die Erfindung wird im Folgenden erneut unter Bezugnahme auf die beiliegenden Figuren erläutert. Es zeigen:
Figur 1: eine schematische Draufsicht auf eine Ausführungsform des erfindungsgemäßen Kombinationsgeräts;
Figur 2: eine schematische Schnittansicht der Dunstabzugsvorrichtung im Bereich der Filtereinheit in einem ersten Zustand;
Figur 3: eine schematische Schnittansicht der Dunstabzugsvorrichtung im Bereich der Filtereinheit in einem zweiten Zustand;
Figur 4: eine schematische Perspektivansicht eines Filterteils eines Filterelementes einer erfindungsgemäß verwendeten Filtereinheit;
Figuren 5a bis 5c: schematische Seitenansichten einer Ausführungsform eines Filterelementes in unterschiedlichen Zuständen;
Figur 6: eine schematische Seitenansicht eines Filterelementes gemäß einer weiteren Ausführungsform einer erfindungsgemäß verwendeten Filtereinheit; und
Figur 7: eine schematische Detailansicht einer Verbindung von Filterteilen gemäß einer Ausführungsform.

Gleiche Elemente werden in den Figuren mit gleichen Bezugszeichen angegeben und gegebenenfalls nur einmalig beschrieben.

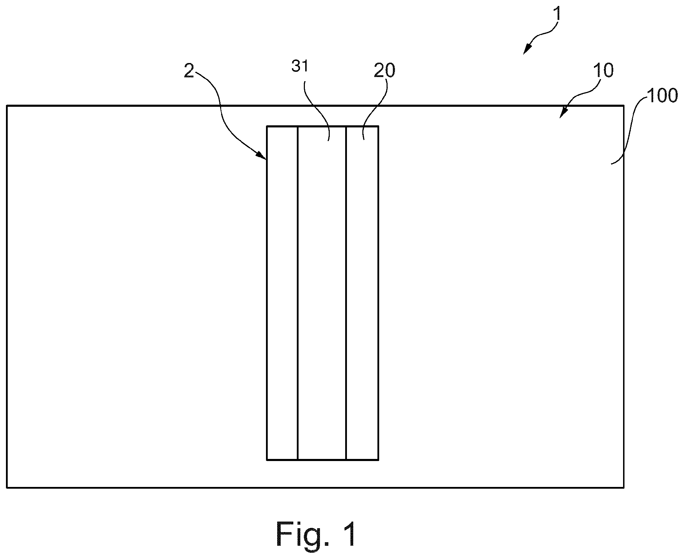

In Figur 1 ist eine schematische Draufsicht auf eine Ausführungsform des erfindungsgemäßen Kombinationsgeräts 1 mit einer Dunstabzugsvorrichtung 2 gezeigt. Die Dunstabzugsvorrichtung 2 ist mit einem Kochfeld 10 integriert. Das Kochfeld 10 weist eine Deckplatte 100 auf. In der Deckplatte 100 ist die Ansaugöffnung 20 der Dunstabzugsvorrichtung 2 vorgesehen. Die Ansaugöffnung 20 erstreckt sich in Tiefenrichtung des Kochfeldes 10. Unterhalb des Kochfeldes 10 ist das Gebläse (nicht gezeigt) der Dunstabzugsvorrichtung 2 in einem Gerätegehäuse (nicht sichtbar) angeordnet.

In der Ansaugöffnung 20 ist der Griff 31 der Filtereinheit 3 der Dunstabzugsvorrichtung 2 angeordnet.

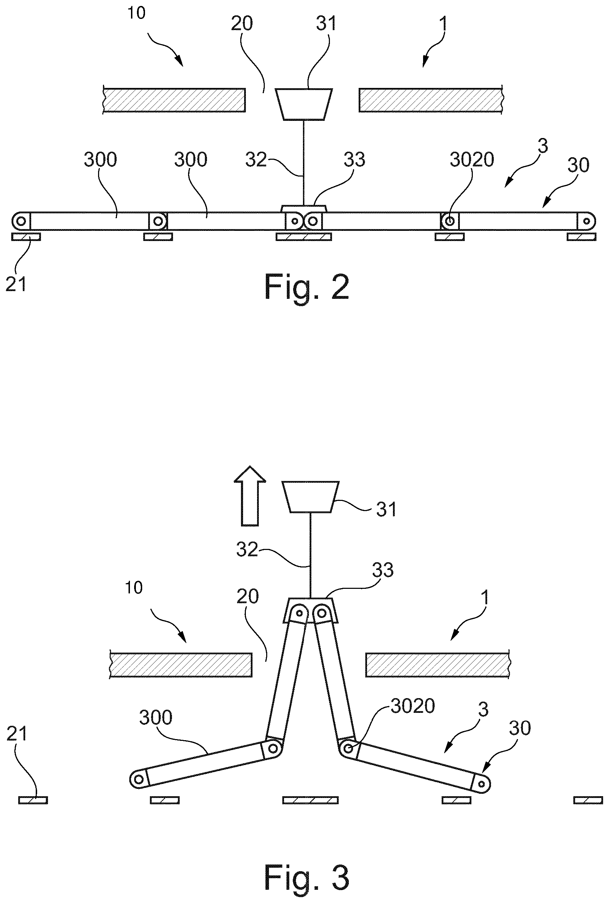

In Figur 2 ist eine schematische Schnittansicht der Dunstabzugsvorrichtung 2 im Bereich der Filtereinheit 3 gezeigt. Die Filtereinheit 3 weist in der dargestellten Ausführungsform zwei Filterelemente 30 auf. Die Filterelemente 30 sind über ein mittiges Zentralteil 33 verbunden. Jedes der Filterelemente 30 besteht in der gezeigten Ausführungsform aus zwei Filterteilen 300. Die Filterteile 300 sind jeweils über Gelenke 3020 mit dem benachbarten Filterteil 300 verbunden. Die Seiten der Filterteile 300, die über ein Gelenk 3020 miteinander verbunden sind, werden auch als Gelenkseiten des Filterteils 300 bezeichnet.

In dem in Figur 2 gezeigten Zustand sind die die Filterelemente 30 in die Dunstabzugsvorrichtung 2 eingebracht. Figur 2 zeigt die Betriebsposition der Filtereinheit 3. Die Filterelemente 30 werden hierbei durch Auflageflächen 21 gehalten, auf denen die Gelenke 3020 aufliegen. In diesem Zustand liegen die Filterteile 300 in einer Ebene. Der Winkel zwischen den benachbarten Filterteilen 300 jedes Filterelementes 30 beträgt 180°. Auch der Winkel zwischen den Filterteilen 300, die über das Zentralteil 33 miteinander verbunden sind, beträgt 180°. Es liegt aber auch im Rahmen der Erfindung, dass in der Betriebsposition der Winkel zwischen den Filterteilen 300 jedes Filterelementes 30 größer als 180° ist und insbesondere die äußeren Filterteile 300 leicht nach unten geneigt sind. Ebenso ist es auch möglich, dass in der Betriebsposition der Winkel zwischen den mittleren Filterteilen 300, die über das Zentralteil 33 miteinander verbunden sind, kleiner als 180° ist und diese damit zu dem Zentralteil 33 nach oben geneigt sind.

An dem Zentralteil 33 ist eine Halterung 32 vorgesehen, die beispielsweise ein oder mehrere Seile oder Stangen darstellen kann. Die Halterung 32 verbindet das Zentralteil 33 mit dem Griff 31. Wie sich aus Figur 2 ergibt, ist der Griff 31 mittig in der Ansaugöffnung 20 angeordnet. Die Ansaugöffnung 20 ist in der gezeigten Ausführungsform in dem Kochfeld 10 vorgesehen.

In Figur 3 ist die Filtereinheit 3 nach Figur 2 in dem Zustand gezeigt, in dem die Filterelemente 30 aus der Dunstabzugsvorrichtung 2 entnommen werden. Dieser Zustand kann auch als eine Entnahmeposition bezeichnet werden. Wie sich aus Figur 3 ergibt, bewegen sich die Filterelemente 30 beim Anheben des Griffes 31 so, dass diese an dem Zentralteil 33 nach unten verschwenken. Zudem bewegen sich die Filterteile 300 des jeweiligen Filterelementes 30 relativ zueinander.

Dadurch wird die Breite der Filtereinheit 3 bei einem über die in Figur 3 gezeigten Position weiteren nach oben Bewegen des Zentralteils 33 nach oben auf die Breite des Zentralteils 33 verkleinert und kann dadurch auf einfache Weise durch die Ansaugöffnung 20 nach oben entnommen werden.

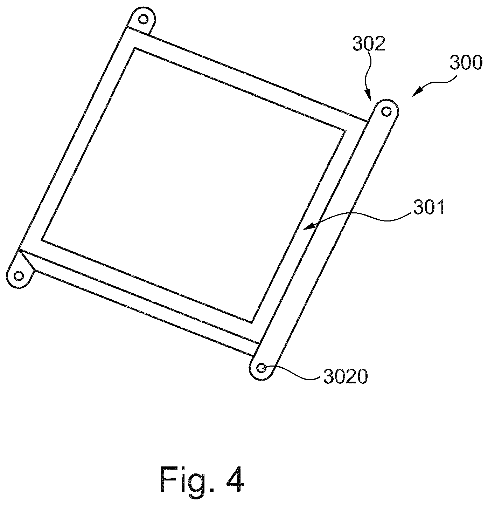

In Figur 4 ist eine schematische Perspektivansicht einer Ausführungsform eines Filterteils 300 gezeigt. Das Filterteil 300 besteht aus einem Filterrahmen 301, in dem das Filtermaterial (in Figur 4 nicht gezeigt) gehalten wird. An dem Filterrahmen 301 sind Verbindungsstege 302 vorgesehen. In der gezeigten Ausführungsform sind an zwei gegenüberliegenden Seiten des Filterteils 300, insbesondere des Filterrahmens 301 jeweils zwei Verbindungsstege 302 an den seitlichen Enden vorgesehen und erstrecken sich senkrecht zu dem Filterrahmen 301 in Längsrichtung des Filterteils 300. An jedem der Verbindungsstege 302 ist ein Verbindungselement in Form einer Sicke oder Noppe vorgesehen, über das in Zusammenwirkung mit einem Verbindungselement, Noppe oder Sicke, eines weiteren Filterteils 300 ein Gelenk 3020 gebildet wird.

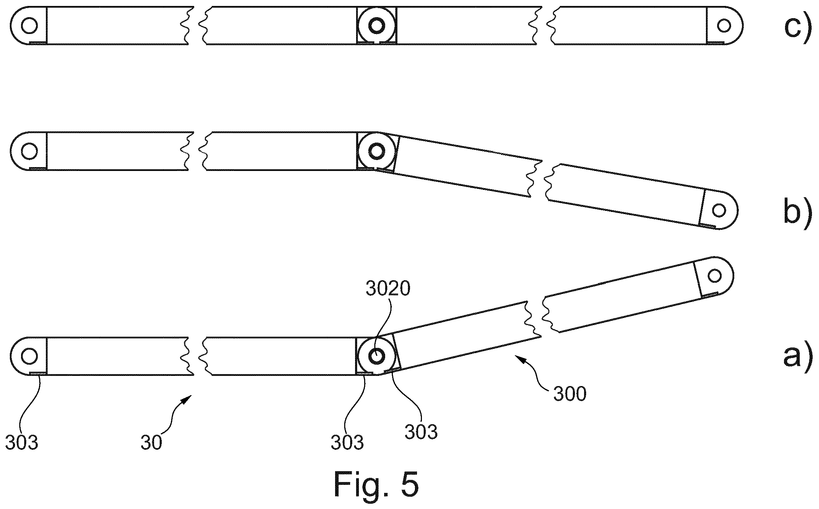

In den Figuren 5a bis 5c ist eine Ausführungsform eines Filterelementes 30 in verschiedenen Zuständen gezeigt. Die Ausführungsform des Filterelementes 30 wird durch zwei Filterteile 300 gebildet, die miteinander über ein Gelenk 3020 verbunden sind. An jedem der Filterteile 300 ist an den gegenüberliegenden Seiten jeweils ein Deckstreifen 303 an der Unterseite des Filterteils 300 vorgesehen. Der Deckstreifen 303 erstreckt sich parallel zu der Unterseite des Filterteils 300 und ist dem benachbarten Filterteil 300 zugewandt. Figur 5c zeigt, dass bei der Ausrichtung der Filterteile 300 in der Horizontalen zwischen den Deckstreifen 303 ein kleiner Spalt gebildet ist. Die Breite dieses Spaltes definiert bei einem Deckstreifen 303 aus starrem Material den Winkel, um den das rechte Filterteil 300 nach unten verschwenkt werden kann. Dies ist in Figur 5b gezeigt. Ein Verschwenken des rechten Filterteils 300 nach oben wird hingegen, wie in Figur 5a gezeigt, durch die Dichtstreifen 303 nicht beeinträchtigt.

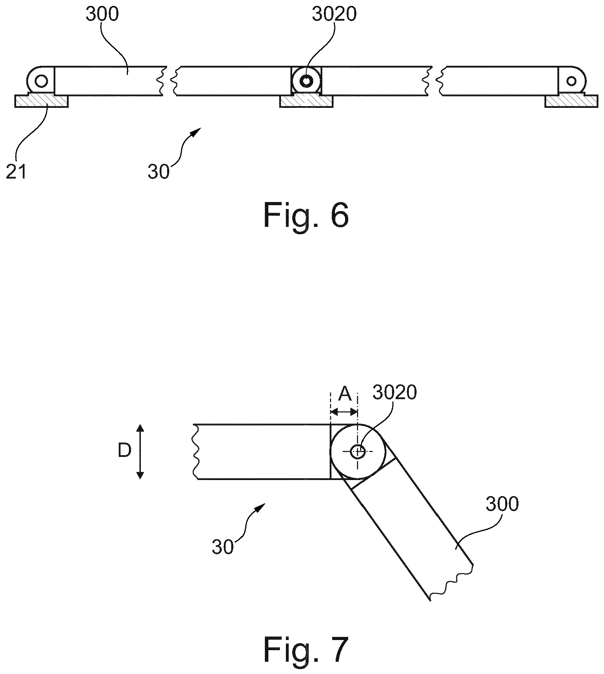

In Figur 6 ist eine schematische Seitenansicht eines Filterelementes 30 gemäß einer weiteren Ausführungsform einer erfindungsgemäß verwendeten Filtereinheit 3 gezeigt. Bei dieser Ausführungsform sind im Gegensatz zu der Ausführungsform nach Figur 5 an den Filterteilen 300 keine Deckstreifen vorgesehen. In der in Figur 6 gezeigten Ausführungsform ist aber an den Auflageflächen 21 jeweils eine mittige Erhöhung vorgesehen. Über die Erhöhung wird zum einen ein Zentrieren der Gelenke 3020 an den Auflageflächen 21 und damit ein zuverlässiges Halten des Filterelementes 30 gewährleistet. Zum anderen wird durch die Erhöhung die Abdichtungswirkung der Auflageflächen 21 verbessert.

Wie sich aus Figur 7 ergibt, wird bei der Ausgestaltung der Filterteile 300 nach der Ausführungsform, bei der kein Dichtstreifen vorgesehen ist, der Spalt zwischen Filterteilen 300 durch die Dicke der Filterteile 300 mitbestimmt. Je dünner das Filterteil 300 desto geringer kann der Spalt zwischen den Filterteilen 300 sein. Die Gelenkposition ist proportional zur Dicke des Filterteils 300. Der Abstand A von der Gelenkseite des Filterteils 300 zu dem Gelenk 3020 sollte größer als die Hälfte der Dicke des Filterteils 300 sein. Daher können dünnere Filterteile 300 zu einer geringeren Leckage führen.

Die vorliegende Erfindung weist eine Reihe von Vorteilen auf. Insbesondere ist ein Vorteil der Erfindung gegenüber dem Stand der Technik, dass man auch bei Geräten mit stark eingeschränkter Zugänglichkeit größere Filterflächen unterbringen kann. Die Dichtigkeit der Gelenke kann über verschiedene Möglichkeiten sichergestellt werden.

### Bezugszeichenliste

- 1: Kombinationsgerät
- 10: Kochfeld
- 100: Deckplatte

- 2: Dunstabzugsvorrichtung
- 20: Ansaugöffnung
- 21: Auflagefläche

- 3: Filtereinheit
- 30: Filterelement
- 300: Filterteil
- 301: Filterrahmen
- 302: Verbindungssteg
- 3020: Gelenk
- 303: Dichtstreifen

- 31: Griff
- 32: Halterung
- 33: Zentralteil

- D: Dicke Filterteil
- A: Abstand zu Gelenk

## Patentansprüche

1. Kombinationsgerät, in dem eine Dunstabzugsvorrichtung (2) mit einem Kochfeld (10) integriert ist, wobei die Dunstabzugsvorrichtung (2) zumindest eine Filtereinheit aufweist, wobei die Filtereinheit (3) zwei Filterelemente (30) aufweist, die miteinander über ein Zentralteil (33), an dem die Filterelemente (30) beweglich befestigt sind, beweglich verbunden sind, **dadurch gekennzeichnet, dass** die zwei Filterelemente (30) aus mindestens zwei Filterteilen (300) bestehen, die jeweils so über ein Gelenk (3020) beweglich miteinander verbunden sind, dass der Winkel zwischen zwei benachbarten Filterteilen (300) eines Filterelementes (30) in einer Betriebsposition der Filtereinheit (3) größer als 90° und kleiner als 270° ist.

2. Kombinationsgerät nach Anspruch 1, wobei in der Betriebsposition alle Filterteile eines Filterelementes in einer Ebene liegen.

3. Kombinationsgerät nach einem der Ansprüche 1 oder 2, wobei an der Verbindung der zwei Filterelemente (30) ein Griff befestigt ist.

4. Kombinationsgerät nach einem der Ansprüche 1 bis 3, wobei der Winkel zwischen den Filterteilen (300) der Filtereinheit (3), die über die Verbindung der zwei Filterelemente (30) miteinander verbunden sind, in der Betriebsposition der Filtereinheit (3) in einem Bereich zwischen 90 und 180° liegt.

5. Kombinationsgerät nach Anspruch 1 bis 4, wobei an der Gelenkseite mindestens eines Filterteils (300) mindestens einen Verbindungssteg (302) zur Bildung des Gelenkes vorgesehen ist, der sich in Richtung des Filterteils (300), zu dem die Gelenkverbindung hergestellt werden soll, erstreckt.

6. Kombinationsgerät nach Anspruch 5, wobei an dem Verbindungssteg (302) eine Noppe oder eine Senke vorgesehen ist.

7. Kombinationsgerät nach einem der Ansprüche 1 bis 6, wobei das Filterteil (300) zwei gegenüberliegende Gelenkseiten aufweist und an jeder der Gelenkseiten zwei Verbindungsstege (302) vorgesehen sind.

8. Kombinationsgerät nach einem der Ansprüche 1 bis 7, wobei an der Gelenkseite eines Filterteils (300) ein sich über die Breite der Gelenkseite erstreckender Dichtstreifen (303) vorgesehen ist.

9. Kombinationsgerät nach einem der Ansprüche 1 bis 8, wobei in der Dunstabzugsvorrichtung (2) eine Führung für das mindestens eine Filterelement (30) vorgesehen ist.

10. Kombinationsgerät nach einem der Ansprüche 1 bis 9, wobei die Dunstabzugsvorrichtung (2) ein Gerätegehäuse aufweist und in dem Gerätegehäuse mindestens zwei Auflageflächen (21) für zumindest einen Teil des mindestens einen Filterelementes (30) vorgesehen sind, wobei die Auflageflächen (21) den Positionen der Gelenke (3020) zwischen den Filterteilen (300) entsprechen.

11. Kombinationsgerät nach Anspruch 10, wobei die Auflageflächen (21) aus einem elastisch verformbaren Material bestehen.

12. Kombinationsgerät nach einem der Ansprüche 10 oder 11, wobei die Auflageflächen (21) jeweils eine mittige Erhöhung aufweisen.

## Claims

1. Combination appliance, in which an extractor apparatus (2) with a hob (10) is integrated, wherein the extractor apparatus (2) has at least one filter unit, wherein the filter unit (3) has two filter elements (30) which are moveably connected to one another by way of a central part (33) onto which the filter elements (30) are moveably fastened, **characterised in that** the two filter elements (30) consist of at least two filter parts (300), which are each moveably connected to one another by way of a joint (3020) such that, in an operating position of the filter unit (3), the angle between two adjacent filter parts (300) of a filter element (30) is greater than 90° and smaller than 270°.

2. Combination appliance according to claim 1, wherein in the operating position, all filter parts of a filter element lie on one plane.

3. Combination appliance according to one of claims 1 or 2, wherein a handle is fastened to the connection between the two filter elements (30).

4. Combination appliance according to one of claims 1 to 3, wherein in the operating position of the filter unit (3), the angle between the filter parts (300) of the filter unit (3), which parts are connected to one another by way of the connection between the two filter elements (30), lies in a range between 90 and 180°.

5. Combination appliance according to claim 1 to 4, wherein at least one connecting web (302) is provided on the joint side of at least one filter part (300) to form the joint, which extends in the direction of the filter part (300) to which the joint connection is to be made.

6. Combination appliance according to claim 5, wherein a nub or a sink is provided on the connecting web (302).

7. Combination appliance according to one of claims 1 to 6, wherein the filter part (300) has two opposing joint sides and two connecting webs (302) are provided on each of the joint sides.

8. Combination appliance according to one of claims 1 to 7, wherein a sealing strip (303) which extends across the width of the joint side is provided on the joint side of a filter part (300).

9. Combination appliance according to one of claims 1 to 8, wherein a guide for the at least one filter element (30) is provided in the extractor apparatus (2).

10. Combination appliance according to one of claims 1 to 9, wherein the extractor apparatus (2) has an appliance housing and at least two contact surfaces (21) are provided in the appliance housing for at least one part of the at least one filter element (30), wherein the contact surfaces (21) correspond to the positions of the joints (3020) between the filter parts (300).

11. Combination appliance according to claim 10, wherein the contact surfaces (21) consist of an elastically deformable material.

12. Combination appliance according to one of claims 10 or 11, wherein the contact surfaces (21) each have a central elevation.

## Revendications

1. Appareil combiné au sein duquel un dispositif d'extraction de vapeur (2) est intégré à une plaque de cuisson (10), dans lequel le dispositif d'extraction de vapeur (2) présente au moins une unité filtrante, dans lequel l'unité filtrante (3) présente deux éléments filtrants (30) qui sont reliés l'un à l'autre de manière mobile par l'intermédiaire d'une partie centrale (33) au niveau de laquelle les éléments filtrants (30) sont fixés de manière mobile, **caractérisé en ce que** les deux éléments filtrants (30) sont constitués d'au moins deux parties filtrantes (300) qui sont respectivement reliées l'une à l'autre de manière mobile par l'intermédiaire d'une articulation (3020) de sorte que l'angle entre deux parties filtrantes (300), voisines, d'un élément filtrant (30) dans une position de fonctionnement de l'unité filtrante (3) est supérieur à 90° et inférieur à 270°.

2. Appareil combiné selon la revendication 1, dans lequel, dans la position de fonctionnement, toutes les parties filtrantes d'un élément filtrant se trouvent dans un plan.

3. Appareil combiné selon l'une quelconque des revendications 1 ou 2, dans lequel une poignée est fixée à la liaison des deux éléments filtrants (30).

4. Appareil combiné selon l'une quelconque des revendications 1 à 3, dans lequel l'angle entre les parties filtrantes (300) de l'unité filtrante (3), qui sont reliées l'une à l'autre par la liaison des deux éléments filtrants (30), se situe dans une plage comprise entre 90 et 180° dans la position de fonctionnement de l'unité filtrante (3).

5. Appareil combiné selon les revendications 1 à 4, dans lequel au moins une barrette de liaison (302), s'étendant en direction de la partie filtrante (300) vers laquelle la liaison articulée doit être réalisée, est prévue au niveau du côté d'articulation d'au moins une partie filtrante (300) afin de former l'articulation.

6. Appareil combiné selon la revendication 5, dans lequel un bouton ou un évidement est prévu sur la barrette de liaison (302).

7. Appareil combiné selon l'une quelconque des revendications 1 à 6, dans lequel la partie filtrante (300) présente deux côtés d'articulation opposés, et deux barrettes de liaison (302) sont prévues sur chacun des côtés articulation.

8. Appareil combiné selon l'une quelconque des revendications 1 à 7, dans lequel une bande d'étanchéité (303) s'étendant sur la largeur du côté d'articulation est prévue sur le côté d'articulation d'une partie filtrante (300).

9. Appareil combiné selon l'une quelconque des revendications 1 à 8, dans lequel un guide pour le au moins un élément filtrant (30) est prévu dans le dispositif d'extraction de vapeur (2).

10. Appareil combiné selon l'une quelconque des revendications 1 à 9, dans lequel le dispositif d'extraction de vapeur (2) présente un boîtier d'appareil et au moins deux surfaces d'appui (21) destinées à au moins une partie du au moins un élément filtrant (30) sont prévues dans le boîtier d'appareil, dans lequel les surfaces d'appui (21) correspondent aux positions des articulations (3020) entre les parties filtrantes (300).

11. Appareil combiné selon la revendication 10, dans lequel les surfaces d'appui (21) sont constituées d'un matériau élastiquement déformable.

12. Appareil combiné selon l'une quelconque des revendications 10 ou 11, dans lequel les surfaces d'appui (21) présentent respectivement une élévation centrale.
